(19) Europäisches Patentamt
European Patent Office
Office européen des brevets

(11) **EP 2 903 183 B1**

(12) **EUROPEAN PATENT SPECIFICATION**

(45) Date of publication and mention
of the grant of the patent:
**03.10.2018 Bulletin 2018/40**

(51) Int Cl.:
**H04B 10/2513** (2013.01)   **H04L 25/03** (2006.01)
**H04B 10/508** (2013.01)

(21) Application number: **14305144.9**

(22) Date of filing: **31.01.2014**

(54) **Pulse-shaping filter**

Pulsformungsfilter

Filtre de mise en forme d'impulsions

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.08.2015 Bulletin 2015/32**

(73) Proprietor: **Alcatel Lucent**
**91620 Nozay (FR)**

(72) Inventors:
• **Renaudier, Jérémie**
**91620 NOZAY (FR)**
• **Charlet, Gabriel**
**91620 NOZAY (FR)**

(74) Representative: **Berthier, Karine**
**Alcatel-Lucent International**
**Patent Business**
**Site Nokia Paris Saclay**
**Route de Villejust**
**91620 Nozay (FR)**

(56) References cited:
**US-A1- 2008 019 703**

• **ALEXANDRU NICOLAE DUMITRU ET AL:
"Development of Improved Nyquist Filters with
piecewise linear frequency characteristics", 2013
36TH INTERNATIONAL CONFERENCE ON
TELECOMMUNICATIONS AND SIGNAL
PROCESSING (TSP), IEEE, 2 July 2013
(2013-07-02), pages 681-684, XP032492050, DOI:
10.1109/TSP.2013.6614023 ISBN:
978-1-4799-0402-0 [retrieved on 2013-09-27]**
• **ALEXANDRU NICOLAE DUMITRU ET AL:
"Optimization of a square-root Nyquist filter with
staircase frequency characteristic", 2013 4TH
INTERNATIONAL SYMPOSIUM ON ELECTRICAL
AND ELECTRONICS ENGINEERING (ISEEE),
IEEE, 11 October 2013 (2013-10-11), pages 1-5,
XP032527621, DOI: 10.1109/ISEEE.2013.6674319
[retrieved on 2013-11-22]**

**Description**

**Field of the invention**

The invention relates to the technical field of optical communication systems, in particular to pulse-shaping filters that may be employed for signal processing in optical transmitters and optical receivers.

**Background**

In order to increase spectral efficiency of WDM optical fiber transmissions without reducing transmission reach, an efficient method is to reduce the wavelength channel spacing close to the symbol rate of the modulating signal by using a pulse shaping filter that minimizes spectral width. A well-known pulse shaping filter family is called root raised cosine or RRC, in which the roll-off factor can be adjusted to minimize spectral occupancy. When the roll-off factor is close to 0, spectral width is close to the symbol rate R of the modulating signal, the minimum spectral occupancy is obtained while keeping optimum Signal-to-Noise Ratio.

Nevertheless, current techniques used for chromatic dispersion estimation and timing estimation need several couples of spectral lines spaced by the symbol rate R to extract the information. Besides, errors made on timing recovery (clock recovery) typically result in loss of one or more symbols and corruption of a whole FEC frame, i.e. thousands of data bits. Accordingly, it may not be acceptable to reduce the roll-off factor of the RRC filter close to 0.

An example of an optical transmitter comprising a Nyquist filter can be found in US2008/0019703.

**Summary**

The invention provides a pulse-shaping filter for filtering a baseband digital signal suitable for modulating an optical signal in an optical communications system, wherein the pulse-shaping filter has a spectrum $H(f)$ defined by:

$$H(f) = \begin{cases} 1/R, & for \quad |f| \leq R/2 - \Delta f \\ 1/(a \cdot R), & for \quad R/2 - \Delta f < |f| \leq R/2 + \Delta f \\ 0, & otherwise \end{cases}$$

and wherein:

R is a symbol rate of the baseband digital signal,
$\Delta f$ is an excess bandwidth that satisfies:

$$0 \leq \Delta f \leq R/2,$$

and $a$ is a positive gain parameter. Such a pulse-shaping filter may be called "staircase filter".

The quantity $\Delta f$ represents an excess bandwidth that tends to widen the spectral occupancy of the signal. The quantity $2\Delta f/R$ may be called roll-off factor, by analogy with the RRC filter. This quantity may be selected as a function of the requirements of the application case, especially in view of the desired spectral occupancy and acceptable level of inter-symbol interference (ISI). In a preferred embodiment, $\Delta f/R \leq 0.05$.

The quantity $a$ represents a filter gain in the excess bandwidth window. In a preferred embodiment, $a > 1$, for example $a = 2$.

The invention stems from the idea of designing a pulse-shaping that provides a sufficient number of spectral lines with significant energy for timing offset measurement in optical transmission systems. Aspects of the invention are based on the idea of providing such a pulse-shaping that also produces a low level of inter-symbol interference.

Such a pulse-shaping filter may be distributed in diverse manners between an optical transmitter and a corresponding optical receiver, so that the product of a partial filter implemented at the transmitter and another partial filter at the receiver is equal to the pulse shaping filter of the invention. In an embodiment to fulfill the matched filter criteria, the partial filters' amplitude is the square-root of the pulse shaping filter of the invention.

In a preferred embodiment, a=2 enables satisfying the Nyquist criterion (i.e. no inter-symbol interference). Both a Nyquist criterion and a matched-filter criterion may then be satisfied by applying the square root of the staircase function H(f) at both the transmitter side and the receiver side.

In an embodiment, the invention provides also an optical transmitter for an optical communications system, comprising:

a laser source for generating an optical carrier signal,
a baseband signal generator for generating a digital baseband signal ,
a partial pulse shaping filter equal to a square-root of the pulse shaping filter H connected to the baseband signal generator for filtering the baseband signal,
a digital-to-analog converter for converting the filtered baseband signal to an analog modulation signal, and
an optical modulator having an optical input for receiving the optical carrier signal and an electrical input for receiving the analog modulation signal, wherein the optical modulator is adapted to modulate the optical carrier signal with the analog modulation signal and to output a resulting modulated optical signal.

In embodiments, the optical transmitter further comprises a power driver for amplifying the analog modulation signal.

The pulse shaping filter of the invention may be employed with a variety of modulation schemes. In embodiments, the optical modulator employs one of a QPSK modulation scheme and a QAM modulation scheme.

In an embodiment, the optical modulator is a Mach-Zehnder modulator comprising two Mach-Zehnder interferometers to modulate respectively an in-phase component and a quadrature-phase component of the optical carrier signal.

In an embodiment, the invention provides also an optical receiver for an optical communications system, comprising:

an optical input for receiving a modulated optical signal,
a coherent detection chain for detecting an in-phase component and a quadrature-phase component of the modulated optical signal and generating corresponding electric detection signals,
a digital signal processor for processing the corresponding electric detection signals,
wherein the digital signal processor comprises a partial pulse shaping filter equal to a square-root of the pulse shaping filter H.

In an embodiment, the invention provides also an optical communications system comprising the above-mentioned optical transmitter, the above-mentioned optical receiver, and an optical link connecting the optical receiver to the optical transmitter in the optical domain.

**Brief description of the drawings**

These and other aspects of the invention will be apparent from and elucidated with reference to the embodiments described hereinafter, by way of example, with reference to the drawings.

Figure 1 is a diagram showing the frequency-domain transfer function of a pulse-shaping filter employed for optical communications.
Figure 2 is a functional representation of an optical communications system in which the filter of Fig. 1 may be employed.
Fig. 3 is a functional representation of a signal processing chain in which a pulse-shaping filter may be implemented.
Figs. 4 and 5 are diagrams showing the frequency-domain transfer function of the pulse-shaping filter in embodiments.

**Detailed description of the embodiments**

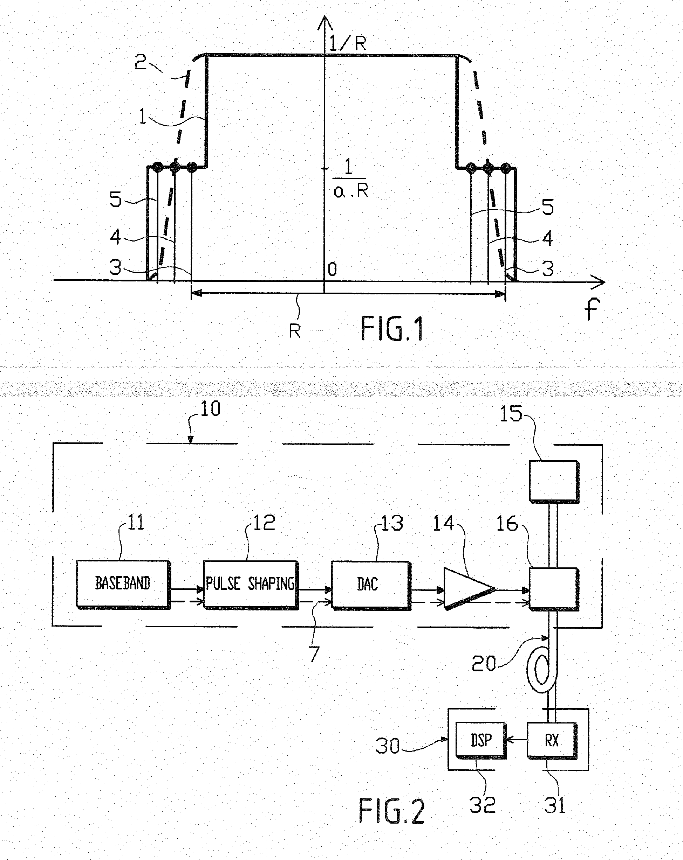

With reference to Figure 1, the frequency-domain amplitude of the pulse filter of the invention is shown in solid line at numeral 1 whereas the frequency-domain amplitude of a conventional raised cosine (RC) filter is shown in dotted line at numeral 2. It is seen that the filter of the invention has a staircase shape that keeps a constant level 1/(a.R) about the two frequencies +R/2 and -R/2. Accordingly, a modulated optical signal processed with such filter at the transmitter and/or receiver may exhibit a plurality of pairs of spectral lines having sufficient power for timing offset estimation or chromatic dispersion estimation, i.e. spectral lines distant by a frequency equal to the symbol rate R, such as the pair of spectral lines 3 shown on Fig. 1.

Sufficient power as employed herein means that those spectra lines of the received and filtered signal are above the noise background accumulated during the fiber optical propagation. Indeed, weak spectral lines below noise level cannot be exploited for timing estimation purposes. In the example shown on Fig. 1, a single pair of spectral lines 4 could be exploited in case of RC pulse shaping, while staircase pulse shaping allows the use of three pairs of lines 3, 4, 5 with power greater than noise level.

In order to generate such staircase pulse shaping in an optical transmitter, a high resolution finite response filter may be employed, with a relatively high number of filter taps each corresponding to a sampling time. The time-domain filter may be generated by inverse Fourier-transform of the spectral-domain functions defined above.

At the receiver end, the matched filter may be similarly implemented as a high-resolution filter in the digital signal processing chain, e.g. together with a Chromatic Dispersion compensation filter or integrated in an adaptive equalizer employing a constant modulus algorithm (CMA) for polarization demultiplexing.

Alternatively, the pulse shaping filter may be deployed only at transmitter end or only at receiver end if some small performance degradation is accepted, e.g. due to residual ISI or non-matched filter.

With reference to Fig. 2, an optical communications system is schematically depicted. It comprises an optical transmitter 10, an optical fiber link 20 and an optical receiver 30.

The optical transmitter 10 comprises an optical layer including laser source 15 and optical modulator 16, e.g. Mach-Zehnder modulators for QPSK modulation, and an electrical layer including baseband signal generator 11, pulse shaping filter 12, multi-level digital-to-analog converter 13, and power driver 14 to feed to a baseband digital signal to optical modulator 16.

In embodiments employing QAM and/or Polarization Division Multiplexing (PDM) the electrical layer may generate more than one baseband signal to modulate separately each phase component and/or each polarization component of the optical signal, e.g. 2 or 4 parallel baseband signals per wavelength channel, as schematically depicted at numeral 7.

The optical receiver 30 comprises an optical layer 31, e.g. including coherent mixer and photodiodes for generating electric detection signals, and an electrical layer including a digital signal processing chain.

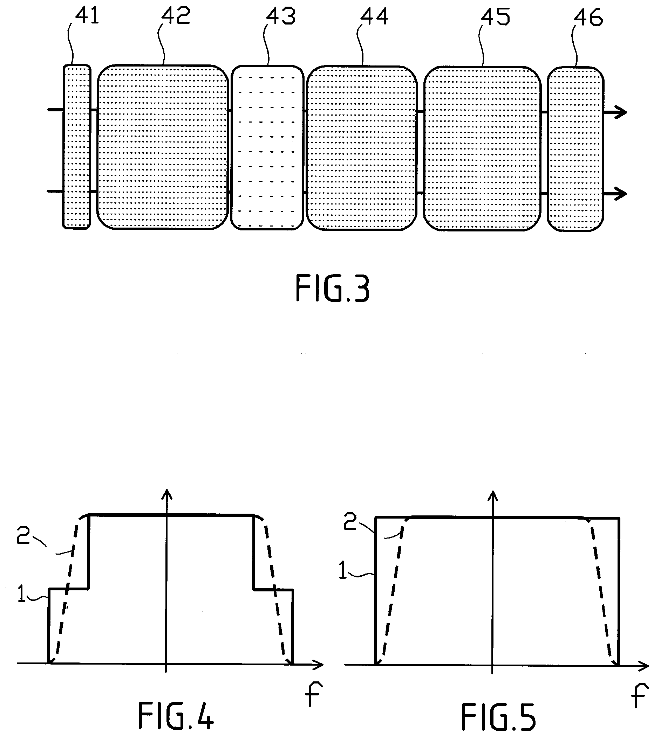

Fig. 3 illustrates an embodiment of the signal processing chain. The incoming optical signal is sent into a polarization-diversity coherent mixer feeding four balanced photodiodes (not shown) so as to supply the in-phase and quadrature components of the signal along the two polarization axes of the light. These electrical signals are sampled by a four-channel analog-to-digital converter stage 41. The received samples are digitally processed to recover the transmitted data. The digital signal processing chain includes the following stages: chromatic dispersion compensation stage 42, timing recovery stage 43, polarization demultiplexing stage 44, carrier frequency and phase recovery stage 45 and Forward error correction stage 46.

Chromatic dispersion compensation stage 42 may be implemented as an all-pass filter. In addition, chromatic dispersion estimation can be done offline as chromatic dispersion is fixed over time.

Timing recovery and chromatic dispersion estimation are achieved by analyzing the spectral lines about $f=-B/2$ and $f=+B/2$, as explained more precisely in "A symbol Timing recovery Scheme Based on spectral Redundancy", S. K. Barton, Y. O. Al-Jalili, University of Bradford.

In polarization demultiplexing stage 44, CMA is employed to update a blind equalization filter and tends minimize intersymbol interference (ISI). In the event that the staircase filter with $a = 2$ is employed as the pulse shaping filter at transmitter side, Polarization demultiplexing stage 44 may be employed to implement a matched filter which minimizes noise accumulation.

Fig. 4 illustrates the square root of staircase filter 1 with parameter $a = 2$. With that choice, matched filters may be employed at transmitter and receiver sides to optimize performance.

Fig. 5 illustrates the square root of staircase filter 1 with parameter $a = 1$. With that choice, matched filters cannot be deployed, but the power of spectral lines used for timing recovery is maximized. Hence, timing estimation is optimized.

Experimental assessments of the proposed pulse-shaping technique were made using 32.5 GBaud PDM-16QAM optical signals. OSNR sensitivity comparison between the proposed staircase pulse-shaping and a conventional Nyquist pulse-shaping using the root raised cosine (RRC) with 0.1 roll off shows that the proposed staircase pulse-shaping yields no or negligible benefits for $Q^2$-factor operation below 10 dB.

However, comparison of tolerance to clock frequency mismatch between the staircase pulse-shaping of the invention and a conventional Nyquist pulse-shaping using the root raised cosine (RRC) with 0.1 roll off, which was performed at $Q^2$-factor around 6.5 dB (OSNR 19.5 dB/0.1 nm) corresponding to the operation limit of commonly considered Soft Decision FEC with 20% overhead, shows that the proposed technique provides an increase of the tolerance to clock frequency mismatch between the optical transmitter and optical, hence achieving better robustness for timing recovery.

Finally, comparison of the tolerance to time averaging constraints, which are often related to the amount of jitter carried by the modulated optical signal, shows a better resilience of the staircase pulse-shaping of the invention against timing jitter than the conventional Nyquist pulse-shaping. Namely, the staircase pulse-shaping of the invention makes it possible to operate with smaller time averaging windows.

Elements such as the electrical layer components of the optical transmitters and receivers could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1.   A pulse-shaping filter (1) for filtering a baseband digital signal suitable for modulating an optical signal in an optical communications system, **characterized in that** the pulse-shaping filter has a spectrum $H(f)$ defined by:

$$H(f) = \begin{cases} 1/R, & for \quad |f| \le R/2 - \Delta f \\ 1/(a \cdot R), & for \; R/2 - \Delta f < |f| \le R/2 + \Delta f \\ 0, & otherwise \end{cases}$$

and wherein:

   R is a symbol rate of the baseband digital signal,
   $\Delta f$ is an excess bandwidth that satisfies:

$$0 \le \Delta f \le R/2,$$

   and $a$ is a positive gain parameter.

2.   The pulse-shaping filter of claim 1, wherein $\Delta f/R \le 0.05$

3.   The pulse-shaping filter of claim 1, wherein $a = \sqrt{2}$

4.   An optical transmitter (10) for an optical communications system, comprising:

   a laser source (15) for generating an optical carrier signal,
   a baseband signal generator (11) for generating a digital baseband signal ,
   a partial pulse shaping filter (12) equal to a square-root of the pulse shaping filter in accordance with claim 1 connected to the baseband signal generator for filtering the baseband signal,
   a digital-to-analog converter (13) for converting the filtered baseband signal to an analog modulation signal, and
   an optical modulator (16) having an optical input for receiving the optical carrier signal and an electrical input for receiving the analog modulation signal, wherein the optical modulator is adapted to modulate the optical carrier signal with the analog modulation signal and to output a resulting modulated optical signal.

5.   The optical transmitter of claim 4, further comprising a power driver (14) for amplifying the analog modulation signal.

6.   The optical transmitter of claim 4, wherein the optical modulator (16) employs one of a QPSK modulation scheme and a QAM modulation scheme.

7.   The optical transmitter of claim 5, wherein the optical modulator (16) is a Mach-Zehnder modulator comprising two Mach-Zehnder interferometers to modulate respectively an in-phase component and a quadrature-phase component of the optical carrier signal.

8. An optical receiver (30) for an optical communications system, comprising:

   an optical input for receiving a modulated optical signal,
   a coherent detection chain (31) for detecting an in-phase component and a quadrature-phase component of the modulated optical signal and generating corresponding electric detection signals,
   a digital signal processor (32) for processing the corresponding electric detection signals,
   wherein the digital signal processor comprises a partial pulse shaping filter equal to a square-root of the pulse shaping filter in accordance with claim 1.

9. A optical communications system comprising:

   an optical transmitter (10) in accordance with any one of claims 4 to 7,
   the optical receiver (30) of claim 8, and
   an optical link (20) connecting the optical receiver to the optical transmitter in the optical domain.

**Patentansprüche**

1. Pulsformungsfilter (1) zum Filtern eines digitalen Basisbandsignals, geeignet zum Modulieren eines optischen Signals in einem optischen Kommunikationssystem, **dadurch gekennzeichnet, dass** das Pulsformungsfilter ein Spektrum $H(f)$ aufweist, das definiert ist durch:

$$H(f) = \begin{cases} \dfrac{1}{R}, & f\ddot{u}r & |f| \leq \dfrac{R}{2} - \Delta f \\[2mm] \dfrac{1}{(a \cdot R)}, & f\ddot{u}r \quad \dfrac{R}{2} - \Delta f < |f| \leq \dfrac{R}{2} + \Delta f \\[2mm] 0, & ansonsten \end{cases}$$

und wobei:

   $R$ eine Symbolrate des digitalen Basisbandsignals ist,
   $\Delta f$ eine Überschussbandbreite ist, die Folgendes erfüllt:

$$0 \leq \Delta f \leq \frac{R}{2}$$

und $a$ ein positiver Verstärkungsparameter ist.

2. Pulsformungsfilter nach Anspruch 1, wobei $\Delta f/R \leq 0{,}05$ gilt.

3. Pulsformungsfilter nach Anspruch 1, wobei $a = \sqrt{2}$ gilt.

4. Optischer Sender (10) für ein optisches Kommunikationssystem, das Folgendes umfasst:

   eine Laserquelle (15) zum Erzeugen eines optischen Trägersignals,
   einen Basisbandsignalgenerator (11) zum Erzeugen eines digitalen Basisbandsignals,
   ein Partialpulsformungsfilter (12) gleich einer Quadratwurzel des Pulsformungsfilters nach Anspruch 1, das mit dem Basisbandsignalgenerator zum Filtern des Basisbandsignals verbunden ist,
   einen Digital-Analog-Umsetzer (13) zum Umsetzen des gefilterten Basisbandsignals in ein analoges Modulationssignal, und
   einen optischen Modulator (16) mit einem optischen Eingang zum Empfangen des optischen Trägersignals und einem elektrischen Eingang zum Empfangen des analogen Modulationssignals, wobei der optische Modulator zum Modulieren des optischen Trägersignals mit dem analogen Modulationssignal und zum Ausgeben eines resultierenden modulierten optischen Signals eingerichtet ist.

5. Optischer Sender nach Anspruch 4, der ferner einen Leistungstreiber (14) zum Verstärken des analogen Modulationssignals umfasst.

6. Optischer Sender nach Anspruch 4, wobei der optische Modulator (16) ein QPSK-Modulationsschema oder ein QAM-Modulationsschema einsetzt.

7. Optischer Sender nach Anspruch 5, wobei der optische Modulator (16) ein Mach-Zehnder-Modulator ist, der zwei Mach-Zehnder-Interferometer zum Modulieren einer In-Phase-Komponente bzw. einer Quadratur-Phase-Komponente des optischen Trägersignals umfasst.

8. Optischer Empfänger (30) für ein optisches Kommunikationssystem, der Folgendes umfasst:

   einen optischen Eingang zum Empfangen eines modulierten optischen Signals,
   eine kohärente Detektionskette (31) zum Detektieren einer In-Phase-Komponente und einer Quadratur-Phase-Komponente des modulierten optischen Signals und zum Erzeugen entsprechender elektrischer Detektionssignale,
   einen digitalen Signalprozessor (32) zum Verarbeiten der entsprechenden elektrischen Detektionssignale, wobei der digitale Signalprozessor ein Partialpulsformungsfilter gleich einer Quadratwurzel des Pulsformungsfilters nach Anspruch 1 umfasst.

9. Optisches Kommunikationssystem, das Folgendes umfasst:

   einen optischen Sender (10) nach einem der Ansprüche 4 bis 7,
   den optischen Empfänger (30) nach Anspruch 8, und
   einen optischen Link (20), der den optischen Empfänger mit dem optischen Sender in der optischen Domäne verbindet.

**Revendications**

1. Filtre de mise en forme d'impulsions (1) pour filtrer un signal numérique en bande de base approprié pour moduler un signal optique dans un système de communications optique, **caractérisé en ce que** le filtre de mise en forme d'impulsions a un spectre *H(f)* défini par :

$$H(f) = \begin{cases} 1/R, & pour \ |f| \le R/2 - \Delta f \\ 1/(a \cdot R), & pour \ R/2 - \Delta f < |f| \le R/2 + \Delta f \\ 0, & autrement \end{cases}$$

et dans lequel :

R est un débit de symboles du signal numérique en bande de base,
*Δf* est une bande passante en excès qui vérifie la condition :

$$0 \le \Delta f \ R/2,$$

et α est un paramètre de gain positif.

2. Filtre de mise en forme d'impulsions selon la revendication 1, dans lequel

$$\Delta f/R \le 0{,}05.$$

**3.** Filtre de mise en forme d'impulsions selon la revendication 1, dans lequel a = $\sqrt{2}$.

**4.** Émetteur optique (10) pour un système de communications optique, comprenant :

une source laser (15) pour générer un signal de porteuse optique,
un générateur de signal en bande de base (11) pour générer un signal numérique en bande de base,
un filtre de mise en forme d'impulsions partielle (12) égal à une racine carrée du filtre de mise en forme d'impulsions selon la revendication 1, connecté au générateur de signal en bande de base afin de filtrer le signal en bande de base,
un convertisseur numérique-analogique (13) pour convertir le signal en bande de base filtré en un signal de modulation analogique, et
un modulateur optique (16) ayant une entrée optique pour recevoir le signal de porteuse optique et une entrée électrique pour recevoir le signal de modulation analogique, dans lequel le modulateur optique est destiné à moduler le signal de porteuse optique par le signal de modulation analogique et à émettre un signal optique modulé résultant.

**5.** Émetteur optique selon la revendication 4, comprenant en outre un pilote de puissance (14) pour amplifier le signal de modulation analogique.

**6.** Émetteur optique selon la revendication 4, dans lequel le modulateur optique (16) utilise l'un des schémas de modulation QPSK et de modulation QAM.

**7.** Émetteur optique selon la revendication 5, dans lequel le modulateur optique (16) est un modulateur de Mach-Zehnder comprenant deux interféromètres de Mach-Zehnder pour moduler respectivement une composante en phase et une composante en quadrature de phase du signal de porteuse optique.

**8.** Récepteur optique (30) pour un système de communications optique, comprenant :

une entrée optique pour recevoir un signal optique modulé,
une chaîne de détection cohérente (31) pour détecter une composante en phase et une composante en quadrature de phase du signal optique modulé et générer des signaux de détection électriques correspondants,
un processeur de signal numérique (32) pour traiter les signaux de détection électriques correspondants,
dans lequel le processeur de signal numérique comprend un filtre de mise en forme d'impulsions partielle égal à une racine carrée du filtre de mise en forme d'impulsions selon la revendication 1.

**9.** Système de communications optique comprenant :

un émetteur optique (10) selon l'une quelconque des revendications 4 à 7,
le récepteur optique (30) selon la revendication 8, et
une liaison optique (20) connectant le récepteur optique à l'émetteur optique dans le domaine optique.

FIG.1

FIG.2

41  42  43  44  45  46

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080019703 A

**Non-patent literature cited in the description**

- **S. K. BARTON ; Y. O. AL-JALILI.** A symbol Timing recovery Scheme Based on spectral Redundancy. University of Bradford